# EUROPEAN PATENT SPECIFICATION

(11) **EP 0 674 412 B1**
(45) Date of publication and mention of the grant of the patent: **14.07.2004**
(21) Application number: 95301963.5
(22) Date of filing: 23.03.1995
(51) Int. Cl.: H04L 27/22, H04L 27/233

(54) **Method and apparatus for automatic frequency control**
Verfahren und Vorrichtung für automatische Frequenzregelung
Procédé et appareil pour la régulation automatique de la fréquence

(30) Priority: 25.03.1994 KR 9406089; 25.03.1994 KR 9406090
(43) Date of publication of application: 27.09.1995
(73) Proprietor: Samsung Electronics Co., Ltd., Suwon-city, Kyungki-do 441-370 (KR)
(72) Inventor: Choi, Yang-Seok, Chungnang-gu, Seoul (KR)
(74) Representative: Neill, Alastair William

(56) References cited:
- EP-A- 0 491 403
- US-A- 4 520 493
- NATALI F D: "AFC TRACKING ALGORITHMS" IEEE TRANSACTIONS ON COMMUNICATIONS,US,IEEE INC. NEW YORK, vol. COM-32, no. 8, August 1984 (1984-08), pages 935-947, XP000758571 ISSN: 0090-6778

## Description

### Field of the Invention

The present invention relates to an automatic frequency control method and an apparatus therefor, and more particularly, to an automatic frequency control technology which is used for detecting syncs from a signal which is M-ary phase-shift-keying (MPSK) modulated and transmitted.

### Description of Related Art

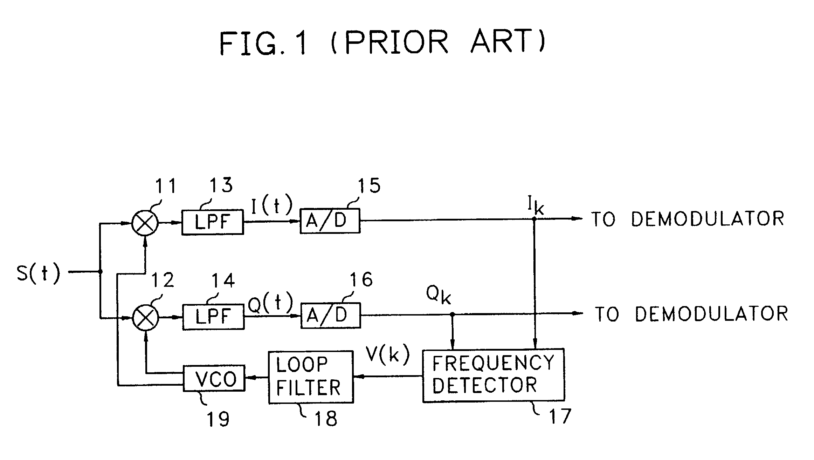

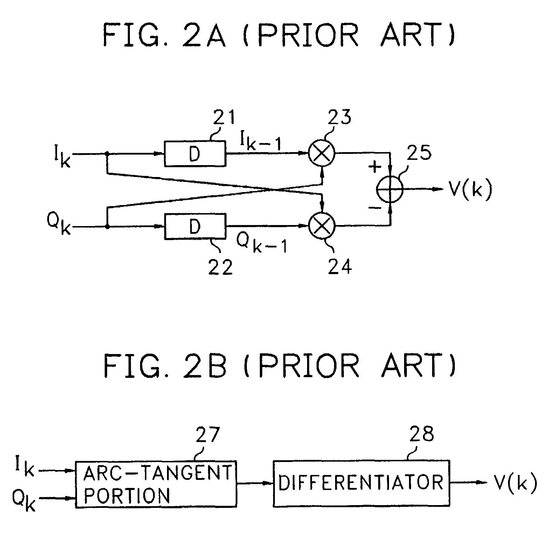

In the communication technology field, a receiver adopting a sync detection method detects a sync from a received signal and then performs demodulation of the signal. It is possible to perfectly detect the sync from the received signal and to perfectly demodulate the received signal into an original signal, when both the frequency and the phase of a local carrier signal are the same as those of a modulated carrier signal. Thus, both the frequency and the phase of a local carrier signal should be synchronized with those of a modulated carrier signal, respectively. A conventional technology for detecting the sync from the received signal will be described below with reference to Figures 1, 2A and 2B.

Figure 1 shows an automatic frequency control apparatus for general quadrature phase-shift-keying (QPSK) demodulation. In Figure 1, a received signal is input to multipliers 11 and 12. Each of multipliers 11 and 12 multiplies the received signal by an output of a voltage controlled oscillator 19. Multipliers 11 and 12 generate signals of which the phases are different from each other by 90°. The output of multiplier 11 or 12 is low-frequency-converted into a baseband signal by a low-pass filter 13 or 14. When the received signal does not include the Gaussian noise, the former can be expressed as the following equation: S(t)=Acos(ω₀ t+ϕ(t)) . Here, S(t) is a function of a received signal at time t, A is an amplitude, ω₀ is a frequency, and ϕ (t) is a function of a phase at time t. In this case, low-pass filter 13 generates an in-phase (I) channel signal which is represented as an equation: I(t)=Acos(Δωt+ϕ(t)) . On the other hand, low-pass filter 14 generates a quadrature (Q) channel signal which is represented as an equation: Q(t)=Asin(Δωt+ϕ(t)) . Here, A is an amplitude, Δω is a frequency difference, and ϕ(t) is a function of a phase at time t. Signals I(t) and Q(t) after passing through low-pass filters 13 and 14 are digitally converted by analog-to-digital converters 15 and 16, respectively. The output signals Iₖ and Qₖ of analog-to-digital converters 15 and 16 are transmitted for signal demodulation and simultaneously supplied to a frequency detector 17. The output signals Iₖ and Qₖ of analog-to-digital converters 15 and 16 have a phase ϕ(t) which is varied every symbol period T_{b}, respectively. For example, in the case of the QPSK method, phase ϕ(t) has one value of 45°, 135°, -45° and -135°, which is varied every symbol period of T_{b} according to bit-stream information of a transmitter end. Frequency detector 17 receives two channel signals Iₖ and Qₖ and then generates a frequency offset signal V(k). Frequency offset signal V(k) is generated when a local oscillated frequency does not match the frequency of the received signal in an actual apparatus. Frequency offset signal V(k) passes through a loop filter 18, and then is supplied to a voltage controlled oscillator (VCO) 19, VCO 19 generates signals having respectively different local oscillated frequencies according to the input frequency offset signal V(k). The local oscillated signals are supplied to multipliers 11 and 12, and used for generating an I-channel signal and a Q-channel signal having a 90° phase difference from each other. By repeating such a process, both the frequency and the phase of the internal oscillated signal are synchronized with those of the received signal.

The technologies of detecting the frequency offset information are described in the following references:
[1] AFC Tracking Algorithms (IEEE trans, on communications, vol COM-32, No. 8, August 1984, pp 935-947); and
[2] A New QPSK Demodulator for Digital DBS Receivers (IEEE 1922 pp. 192-193).

Figure 2A shows a circuit which adopts a cross-product disclosed in the above reference [1] as frequency detector 17 of Figure 1. When the sampled and digitally converted I-channel and Q-channel signals Iₖ and Qₖ are input to the Figure 2 circuit, I-channel signal Iₖ is supplied to a delay 21 and multiplier 24, while Q-channel signal Qₖ is supplied to a delay 22 and multiplier 23. Multiplier 23 multiplies the delayed I channel signal Iₖ₋₁ by Q-channel signal Qₖ while multiplier 24 multiplies the delayed Q-channel signal Qₖ₋₁ by I-channel signal Iₖ. A subtracter 25 subtracts output signal Iₖ·Qₖ₋₁ of multiplier 24 from output signal Qₖ·Iₖ₋₁ of multiplier 23. Subtracter 25 generates frequency offset signal V(k) which is determined by sampling period Tₛ and symbol period T_{b}. When sampling period Tₛ equals symbol period T_{b} subtracter 25 generates frequency offset signal V(k) according to the following equation (1).${\text{V(k)=A}}^{\text{2}} {\text{sin(ΔωT}}_{\text{s}} {\text{+θ}}_{\text{k}} \text{)}$

Here, Δω=ω₁-ω₀, ϕ (t) = ϕₖ, kTₛ ≤ t ≤ (k-l) Tₛ, and θₖ=ϕₖ-ϕₖ₋ₗ. When Tₛ<T_{b} (=nTₛ), that is, when the input signal is oversampled, frequency offset signal V(k) generated by subtracter 25 is expressed as the following equation (2).$\begin{matrix}\begin{matrix}{\text{V(k)=A}}^{\text{2}} {\text{sin(ΔωT}}_{\text{s}} \text{), if k≠nℓ (ℓ is an integer), and} {\text{V(k)=A}}^{\text{2}} {\text{sin(ΔωT}}_{\text{s}} {\text{+θ}}_{\text{l}} \text{), if k=nℓ (ℓ is an integer)}\end{matrix}\end{matrix}$

Figure 2B shows a frequency detector using an arc-tangent disclosed in reference [2]. Arc-tangent portion 27 received two channel signals Iₖ and Qₖ and performs an arc-tangent operation using Q-channel signal Qₖ as a numerator and I-channel signal Iₖ as a denominator. A differentiator 28 generates frequency offset signal V(k) which is expressed as the following equations (3) and (4), from the output signal of arc-tangent portion 27.$\begin{matrix}\begin{matrix}\begin{matrix}{\text{V(k)=ΔωT}}_{\text{s}} {\text{+ θ}}_{\text{k}}\end{matrix} \\ \begin{matrix}{\text{V(k)=ΔωT}}_{\text{s}} \text{, if k≠nℓ (ℓ is an integer), and} {\text{V(k)=ΔωT}}_{\text{s}} {\text{+ θ}}_{\text{ℓ}} \text{if k=nℓ; (ℓ is an integer)}\end{matrix}\end{matrix}\end{matrix}$

The above equation (3) represents an output signal of differentiator 28 when Tₛ =T_{b} . The above equation (4) represents an output signal of differentiator 28 when Tₛ<T_{b} (=nTₛ), that is, when the signal is oversampled. To detect an exact frequency, it is not desirable to include terms of θₖ and θₗ of which the values are varied according to the transmitted information. However, as it can be seen from the above equations (1) and (3), when the sampling frequency equals a symbol rate, frequency offset signal V(k) includes a transmission phase value θₖ.

Therefore, it becomes impossible to detect an exact frequency which is proportional to only frequency offset information ΔωT. Also, when the oversampled sample has symbol transition, transmission phase value θₖ exists in frequency offset signal V(k), which interferes with the exact frequency detection. Although the performance of the frequency detection can be enhanced according to a degree of oversampling thereof, it causes cost increase of the hardware for oversampling when the symbol rate is more than 20MHz as in a direct broadcasting satellite (DBS). Such a problem occurs in a differentiator automatic frequency control apparatus and a discrete Fourier transform automatic frequency control apparatus too.

European Patent Application 0491403 A2 discloses a method and device for estimating the carrier frequency of a digital signal. The method involves two estimates of the carrier phase being performed in successive instants, and the estimated carrier frequency is obtained from a comparison of the two estimates.

### Summary of the Invention

It is an aim of embodiments of the present invention to provide an automatic frequency control method for detecting frequency offset information, and particularly reducing the number of reference phases which are used for phase detection of a transmitted signal by altering a phase difference between sampled signals which are detected from a phase shift-keying modulated signal into another phase difference and determining a phase of the transmitted signal by using the altered phase difference.

It is another aim of embodiments of the present invention to provide an automatic frequency control apparatus for detecting frequency offset information, and particularly reducing the number of reference phases which are used for phase detection of a transmitted signal, by determining a phase of the transmitted signal with an altered phase difference obtained by altering a phase difference between phase-shift-keying modulated signals.

According to the present invention, there is provided an automatic frequency control method for receiving an M-ary phase-shift-keying modulated signal, detecting a frequency offset signal and controlling an oscillated frequency based on the detected frequency offset signal, the automatic frequency control method comprising the steps of:
sampling the received signal with a predetermined sampling frequency and generating a sampled complex signal;
detecting a phase difference value between the currently sampled complex signal and the stored previous sampled complex signal, to generate a first phase difference detection signal of which the phase value is the detected phase difference value;
altering the detected phase difference value of the first phase difference detection signal by a phase altering factor, to generate a second phase difference detection signal of which the phase value is the altered phase difference value;
determining transmission phase information which the altered phase difference value has, by using the altered phase difference value of the second phase difference detection signal and reference phase values which are used for information transmission in the M-ary phase shift-keying modulation; and
generating the frequency offset signal by using the determined transmission phase information and the altered phase difference value.

Suitably, said sampling frequency matches a symbol rate of the received signal.

Suitably, said first phase difference detection signal generation step generates the first phase difference detection signal Uₖ having the phase difference value (θₖ+ΔωT) as the phase by calculating the currently sampled complex signal Rₖ and the previously-sampled complex signal Rₖ₋₁ according to the following equation:${\text{U}}_{\text{k}} \text{≡} \frac{{\text{R}}_{\text{k}} \text{R} {\text{*}}_{\text{k} \text{-1}}}{\left|{\text{R}}_{\text{k}}\right| \text{·} \left|{\text{R}}_{\text{k} \text{-1}}\right|} \text{=e} {\text{}}^{\text{j} {\text{(θ}}_{\text{k}} \text{+Δω} \text{T} \text{)}}$ in which θₖ is the transmission phase information and ΔωT is the frequency offset signal.

Suitably, said first phase difference detection signal generation step generates the first phase difference detection signal Uₖ having the phase difference value (θₖ+ΔωT) as the phase by calculating the currently sampled complex signal Rₖ and the previously-sampled complex signal Rₖ₋₁ according to the following equation:${\text{U}}_{\text{k}} {\text{=R}}_{\text{k}} {\text{·R*}}_{\text{k-1}}$ in which R*ₖ₋₁ is a complex conjugate of Rₖ₋₁.

Suitably, said second phase difference detection signal generation step generates the second phase difference detection signal having the altered phase difference value obtained by multiplying the phase difference value by the phase altering factor (M/N) being a ratio of the value M of the phase-shift-keying modulated signal and a coefficient N having a relationship of an equation M=lN where l is a positive integer.

Suitably, said transmission phase information determination step comprises the substeps of:
determining the reference phase values which the altered phase difference value can take among the reference phase values which are used for transmission of the information in the M-ary phase-shift-keying modulation; and
comparing the altered phase difference value with the determined reference phase values, to determine the determined reference phase value which is closest to the altered phase difference value among the determined reference phase values as the altered transmission phase information.

Suitably, said altered phase difference value comprises the frequency offset signal ([M/N]ΔωT) and the altered transmission phase information ([M/N]θₖ) which exist within the range: -π/N<[M/N]ΔωT<π/N in which N satisfies a relationship of equation: M=*l*n where *l* is a positive integer.

Suitably, said frequency offset signal generation step comprises the substeps of:
generating the complex signal having the determined transmission phase information;
multiplying the complex conjugate of the complex signal by the second phase difference detection signal; and
determining the imaginary component signal of the signal obtained by the multiplication as the frequency offset signal.

Suitably, said method further comprises the substep of re-determining a value obtained by multiplying an arc-sine value of the imaginary component determined as the frequency offset signal by the phase altering factor, as a frequency offset signal.

According to a second aspect of the present invention, there is provided an automatic frequency control apparatus for receiving an M-ary phase-shift-keying modulated signal, detecting a frequency offset signal and controlling an oscillated frequency based on the detected frequency offset signal, said automatic frequency control apparatus comprising:
means for sampling the received signal with a predetermined sampling frequency and generating a currently sampled complex signal;
phase difference detection means for receiving the currently sampled signal and detecting a phase difference value between the currently sampled complex signal and the stored previous sampled complex signal, to generate a first phase difference detection signal of which the phase value is the detected phase difference value;
phase difference altering means for receiving the first phase difference detection signal and altering the detected phase difference value of the first phase difference detection signal by a phase altering factor, to generate a second phase difference detection signal of which the phase value is the altered phase difference value; and
means for determining transmission phase information which the altered phase difference value has by using the altered phase difference value of the second phase difference detection signal and reference phase values which are used for information transmission in the M-ary phase-shift-keying modulation, and for generating the frequency offset signal by using the determined transmission phase information and the altered phase difference value.

Suitably, said sampling means samples the received signal with a sampling frequency which matches a symbol rate of the received signal.

Suitably, said phase difference detection means normalizes the currently sampled complex signal and the previously sampled complex signal, and generates the first phase difference detection signal having the phase difference value detected by the normalization.

Suitably, said phase difference detection means complex conjugate-operates the currently sampled complex signal and the previously sampled complex signal, and generates the first phase difference detection signal having the phase difference value detected by the complex-conjugate-operation.

Suitably, said phase difference altering means generates the second phase difference detection signal having the altered phase difference value obtained by multiplying the detected phase difference value which the first phase difference detection signal has, by the phase altering factor (M/N) in which the value M of the phase-shift-keying modulated signal is a numerator and a coefficient N having a relationship of an equation M=*IN* where *l* is a positive integer is a denominator.

Suitably, said frequency offset signal generation means comprises a first frequency offset signal generator for determining the reference phase value in which a difference between the reference phase values and the altered phase difference value used for the information transmission in the M-ary phase-shift-keying modulation exists in the range:
- π/N<[M/N]ΔωT<π/N in which the value M of the M-ary phase-shift-keying modulated signal is a numerator and a coefficient N satisfying an equation: M=*l*N where *l* is a positive integer is a denominator, and generating the complex signal having the determined altered transmission phase information, and for multiplying the complex conjugate of the complex signal by the second phase difference detection signal, thereby generating the imaginary component signal of the signal obtained by the multiplication as the frequency offset signal.

Suitably, said apparatus further comprises a second frequency offset signal generator for generating a new frequency offset signal by multiplying the arc sine value of the frequency offset signal generated by said first frequency offset signal generator by the phase altering factor.

Suitably, said apparatus further comprises phase difference altering means for receiving the first phase difference detection signal and altering the detected phase difference value of the first phase difference detection signal by a phase altering factor M/2 with respect to the value M of the M-ary phase-shift-keying modulated signal,
means for receiving the second phase difference detection signal and determining transmission phase information Ø which the altered phase difference value has, by using the altered phase difference value of the second phase difference detection signal and reference phase values which are used for information transmission in the M-ary phase shift-keying modulation, and for multiplying the second phase difference detection signal by complex signal e^{-jΨ} having the transmission phase information to generate the frequency offset signal based on a sign of the Cₖ among the imagainary component of the signal obtained by multiplication.

Suitably, said frequency offset signal generation means determines imaginary component signal Sₖ as the frequency offset signal when real component signal Cₖ is greater than zero, while determining imaginary component signal -Sₖ as the frequency offset signal when real component signal Cₖ is less than zero.

Suitably, said apparatus further comprises means for generating a new frequency offset signal by eradicating the phase altering factor M/2 and a sine function component which are included in the imaginary component signal Sₖ.

Suitably, said apparatus further comprises phase difference altering means for receiving the first phase difference detection signal and altering the detected phase difference value of the first phase difference detection signal by using a phase altering factor M/4 with respect to the M of the M-ary phase-shift-keying modulated signal, to generate a second phase difference detection signal ( Uₖ ^{M/4} =Cₖ +jSₖ ) of which the phase value is the altered phase difference value ([M/4](θₖ+ΔωT)); and
means for receiving the second phase difference detection signal and generating the frequency offset signal by using the real and imaginary components of the second phase difference detection signal.

Suitably, said frequency offset signal generation means comprises:
a first sign generator for generating a first sign signal being a value of a signum function obtained by subtracting an imaginary component of the second phase difference detection signal from a real component thereof;
a second sign generator for generating a second sign signal being a value of a signum function obtained by adding the real and imaginary components;
a subtracter for subtracting the second sign signal from the first sign signal;
a first adder for adding the first and second sign signals;
a third sign generator for outputting a value of a signum function of the signal applied from the subtracter;
a fourth sign generator for outputting a value of a signum function of the signal applied from the first adder;
a first multiplier for multiplying a first component signal by the output signal from said third sign generator;
a second multiplier for multiplying a second component signal by the output signal from said fourth sign generator; and
a second adder for adding the output signals of said first and second multipliers and generating a frequency offset signal.

Suitably said apparatus further comprises means for generating a new frequency offset signal by multiplying an arc-sine value of the frequency offset signal generated by said frequency offset signal generation means by the phase altering factor.

The automatic frequency control apparatus according to the present invention uses a signal which is sampled with a sampling frequency which matches a symbol rate of the received signal.

### Brief Description of the Drawings

Preferred embodiments of the present are described by way of example only, with reference to the drawings, wherein:
Figure 1 is a block diagram of an automatic frequency control apparatus for general quadrature phase-shift-keying (QPSK) demodulation.
Figures 2A and 2B are schematic diagrams of conventional frequency detectors.
Figure 3 is a block diagram of a frequency detector according to a preferred embodiment of the present invention.
Figure 4 is a graphic diagram for explaining determination of transmission phase information of the frequency detector shown in Figure 3.
Figure 5 is a graphic diagram of discriminating curves for illustrating the frequency offset information of Figure 3.
Figure 6 is a block diagram of a frequency detector according to another preferred embodiment of the present invention.
Figure 7 is a graphic diagram for explaining determination of transmission phase information of the frequency detector shown in Figure 6.
Figure 8 is a graphic diagram of discriminating curves for illustrating the frequency offset information of Figure 6.

### Detailed Description of the Preferred Embodiments

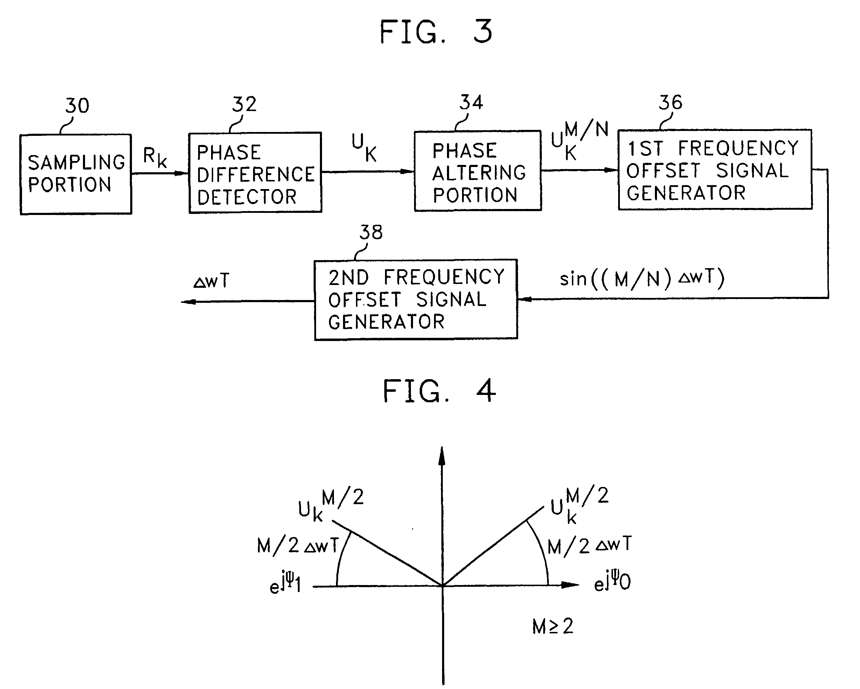

Preferred embodiments of the present invention will be described below in more detail with reference to the accompanying drawings Figures 3 through 8.

Figure 3 shows a frequency detector according to a preferred embodiment of the present invention. The Figure 3 apparatus includes a sampling portion 30, a phase difference detector 32, a phase altering portion 34 and frequency offset signal generators 36 and 38. The M-ary PSK modulated signal has transmission phase information θₖ which is varied according to the transmitted information. The transmission phase information θₖ becomes one of a plurality of reference phases Ψᵢ for transmission of the PSK modulated information. If the MPSK modulated signal is received, a receiver (not shown) demodulates the received signal. Sampling portion 30 samples the input signal with a sampling frequency which is equal to a symbol rate and outputs the sampled result. The currently sampled signal Rₖ includes noise and frequency offset information ΔωT, and can be expressed as the following equation (5) when the magnitude rₖ' is varied due to the noise.${\text{R}}_{\text{k}} {\text{≡ I}}_{\text{k}} {\text{+ jQ}}_{\text{k}} {\text{= r}}_{\text{k}} \text{'· e} {\text{}}^{{\text{j(ψ}}_{\text{k}} {\text{+ ΔωT}}_{\text{k}} \text{)}}$

If the currently sampled complex signal Rₖ is applied to phase difference detector 32, phase difference detector 32 normalizes the sampled complex signal Rₖ according to the following equation (6), to generate a first phase difference detection signal Uₖ. That is, using the stored previously-sampled complex signal Rₖ₋₁, the currently sampled complex signal Rₖ is normalized to generate first phase difference detection signal Uₖ.${\text{U}}_{\text{k}} \text{≡} \frac{{\text{R}}_{\text{k}} \text{R} {\text{*}}_{\text{k} \text{-1}}}{\left|{\text{R}}_{\text{k}}\right| \text{·} \left|{\text{R}}_{\text{k} \text{-1}}\right|} \text{=} \text{e} {\text{}}^{\text{j} {\text{(ψ}}_{\text{k}} {\text{-ψ}}_{\text{k} \text{-1}} \text{+Δω} \text{T} \text{)}} \text{= e} {\text{}}^{\text{j} {\text{(θ}}_{\text{k}} \text{+Δω} \text{T} \text{)}} \text{=} {\text{C}}_{\text{k}} \text{+} {\text{jS}}_{\text{k}}$

Here, Cₖ is a real component signal, Sₖ is an imaginary component signal.

As it can be seen from equation (6), first phase difference detection signal Uₖ is a signal in which a magnitude of the distorted signal due to the noise is compensated. The present invention is not limited to an operation of the normalization by phase difference detector 32. Thus, it is possible for phase difference detector 32 to generate another first phase difference detection signal Uₖ' from signals (Rₖ,Rₖ₋₁) using the relationship of equation Uₖ' = RₖR*ₖ₋₁ for complex conjugate operation. Further, components 34, 36 and 38 to be described later can be constructed so as to operate well also in case of a new first phase difference detection signal Uₖ'. If the phase difference value of first phase difference detection signal Uₖ is < U_{k'} phase difference value θₖ + ΔωT which is calculated by the normalization or the complex conjugate operation always satisfies the following equations (7) and (8).$\begin{matrix}\begin{matrix}\begin{matrix}{\text{∠U}}_{\text{k}} {\text{= θ}}_{\text{k}} \text{+ Δω T}\end{matrix} \\ \begin{matrix}{\text{or ΔωT = ∠ U}}_{\text{k}} {\text{- θ}}_{\text{k}}\end{matrix}\end{matrix}\end{matrix}$

Thus, if transmission phase information θₖ which is varied according to the transmitted information is known, it is possible to exactly calculate frequency offset information ΔωT.

Generally, transmission phase information θₖ is not a sequential value, and is quantized with a reference phase of the MPSK so as to be transmitted. Thus, the quantized transmission phase information θₖ can have reference phase value Ψᵢ, as can be seen from the following equation (9).${\text{θ}}_{\text{k}} {\text{∈{ψ}}_{\text{i}} {\text{|ψ}}_{\text{i}} \text{=O,±(2/M) π,±(4/M) π,±(6/M) π,.....,±((M-2)/M)} \text{π,π; in case of the MPSK}}$

Therefore, when first phase difference detection signal Uₖ has frequency offset information ΔωT within an allowable range in a frequency control apparatus, transmission phase information θₖ can be exactly detected. However, as a value of M is larger in the above equation (9), a slicer (not shown) being a conventional circuit for estimating transmission phase information θₖ becomes complicated. To solve such a problem phase altering portion 34 alters to θₖ+ΔωT of first phase difference detection signal Uₖ using the following equation (10).${\text{U}}_{\text{k}} {\text{}}^{\frac{\text{M}}{\text{N}}} \text{=} \text{e} {\text{}}^{\text{j} \frac{\text{M}}{\text{N}} {\text{(θ}}_{\text{k}} \text{+Δω} \text{T} \text{)}} \text{=} \text{e} {\text{}}^{\text{j} \text{(} \frac{\text{M}}{\text{N}} {\text{θ}}_{\text{k}} \text{+} \frac{\text{M}}{\text{N}} \text{Δω} \text{T} \text{)}} \text{≡} {\text{C}}_{\text{k}} \text{+} {\text{jS}}_{\text{k}}$

Here, M is a multiple of N, that is, M=ℓN where ℓ is a positive integer. Phase altering portion 34 receives first phase difference detection signal Uₖ and alters the phase difference value expressed as equation (7) into [M/N] (θₖ + ΔωT), and generates a second phase difference detection signal Uₖ^{M/N}. Thus, if [M/N] (θₖ+ΔωT) exists within a range expressed as the following equation (11), a value Ψᵢ of the altered transmission phase information [M/N]θₖ can be estimated from the above equation (9).$\text{-} \frac{\text{π}}{\text{N}} \text{<} \frac{\text{M}}{\text{N}} \text{Δω} \text{T} \text{<} \frac{\text{π}}{\text{N}}$

First frequency offset signal generator 36 receives second phase difference detection signal Uₖ^{M/N} from phase altering portion 34, estimates a value of the altered transmission phase information [M/N]θₖ and generates first frequency offset signal sin([M/N]ΔωT) based on the estimated transmission phase information ψᵢ. First frequency offset signal sin([M/N]ΔωT) is calculated by the following equation (22).$\text{sin (} \frac{\text{M}}{\text{N}} \text{Δω} \text{T} \text{) =} \text{Im} \text{[} {\text{U}}_{\text{K}} {\text{}}^{\frac{\text{M}}{\text{N}}} \text{·} \text{e} {\text{}}^{\text{-} \text{j} {\text{ψ}}_{\text{i}}} \text{] =} {\text{S}}_{\text{k}} {\text{cosψ}}_{\text{i}} \text{-} {\text{C}}_{\text{k}} {\text{sinψ}}_{\text{i}}$

Thus, a person skilled in the art which is related to the present invention can obtain frequency offset signal generators of a variety of types which embody equation (12) which use second phase difference detection signal Uₖ^{M/N} and estimated transmission phase information ψᵢ, within the scope of the present invention.

For explanation of a more specific example, an operation of a first frequency offset signal generator 36 when N=2 and M≥N, will be described below with reference to Figure 4. A reference phase Ψᵢ which the altered transmission phase information [M/2]θₖ can take when N=2, is one of Ψ₀=0 and Ψ₁=π from the above equation (9). Such a reference phase Ψᵢ is shown in Figure 4. Thus, when frequency offset information ([M/2]ΔωT) exists within a range expressed as the following equation (13), first frequency offset signal generator 36 uses the input altered phase difference value ∠Uₖ^{M/2} and can estimate the altered transmission phase information ([M/2]θₖ).$\text{-} \frac{\text{π}}{\text{2}} \text{<} \frac{\text{M}}{\text{2}} \text{Δω} \text{T} \text{<} \frac{\text{π}}{\text{2}}$

Phase altering portion 34 which is appropriately constructed when N=2 outputs phase difference detection signal Uₖ^{M/2} as a pattern of a real component signal C_{k,2} and an imaginary component signal S_{k,2} and imaginary component signal S_{k,2} to generate frequency offset signal sin([M/2]ΔωT) . At the beginning, first frequency offset signal generator 36 judges a sign of the input real components signal C_{k,2} to determine the altered transmission phase information ( [M/2] θₖ) . If real component signal C_{k,2} has a positive value, a reference phase ψ₀ of transmission phase information ([M/2]θₖ) has a value of zero, while if real component signal C_{k,2} has a negative value, a reference phase Ψᵢ of transmission phase information ([M/2]θₖ) has a value of π. By the equation (12), when ( [M/2] θₖ) =0, sin ( [M/2] ΔωT) equals Sₖ, while when ([M/2]θₖ) = π, sin([M/2]ΔωT) equals -Sₖ . Thus, first frequency offset signal generator 36 generates frequency offset signal sin([M/2]ΔωT) of Sₖ₂ or -Sₖ₂ which is determined by a sign of real component signal C_{k,2}.

Even when only first frequency offset signal sin([M/N]ΔωT) will be used, an exact frequency offset information which does not include the transmission phase information can also be obtained. However, to eradicate a sine function which is included in first frequency offset signal sin([M/N]ΔωT) , second frequency offset signal generator 38 is additionally used. If first frequency offset signal generator 36 generates first frequency offset signal sin([M/N]ΔωT), second frequency offset signal generator 38 generates second frequency offset signal ΔωT, using the following equation (14).$\text{Δω} \text{T} \text{=} \frac{\text{M}}{\text{N}} {\text{sin}}^{\text{-1}} \text{(} {\text{S}}_{\text{k}} {\text{cosψ}}_{\text{i}} \text{-} {\text{C}}_{\text{k}} {\text{sinψ}}_{\text{i}} \text{)}$

First frequency offset signal sin ( [M/2] ΔωT) or second frequency offset signal ΔωT is used for sync detection of the receiver.

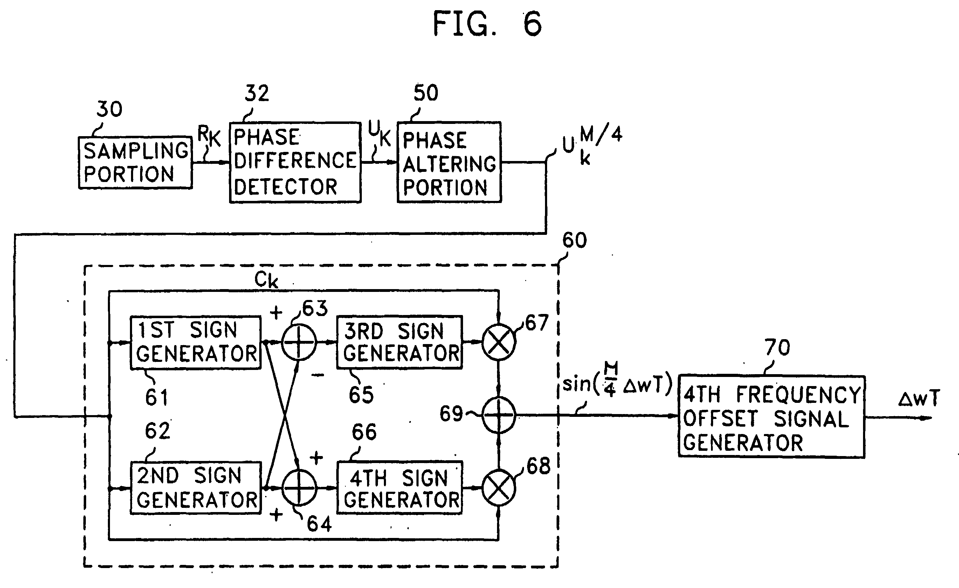

Figure 6 shows a frequency detector according to another preferred embodiment of the present invention. The Figure 6 apparatus is one implemented when N=4 and M≥N in the above equation (10). In Figure 6 sampling portion 30 and phase difference detector 32 perform the same functions as those of the corresponding blocks of the same reference numerals shown in Figure 3. Accordingly, the detailed descriptions thereof will be omitted. Phase altering portion 50 which receives first phase difference detection signal Uₖ uses the above equation (10) to generate phase difference detection signal Uₖ^{M/4} having the altered phase difference value [M/4](θₖ+ΔωT) from phase difference detection signal Uₖ having phase difference value ∠Uₖ. Phase altering portion 50 ouputs phase difference detection signal Uₖ^{M/4} as a pattern of a real component signal C_{k,4} and an imaginary component signal S_{k,4}. A third frequency offset signal generator 60 includes sign generators 61, 62, 65 and 66, subtracter 63, adders 64 and 69 and multipliers 67 and 68. Third frequency offset signal generator 60 receives real component signal C_{k,4} and imaginary component signal S_{k,4} to determine the altered transmission phase information [M/4]θₖ, and to then generate frequency offset signal sin([M/4]ΔωT) . When N=4 reference phase Ψᵢ, satisfying the above equations (9) and (10) is expressed as four values as seen in the following equation (15).$\frac{\text{M}}{\text{4}} {\text{θ}}_{\text{k}} {\text{∈{ψ}}_{\text{i}} {\text{|ψ}}_{\text{i}} \text{=0,±} \frac{\text{π}}{\text{2}} \text{,π}}$

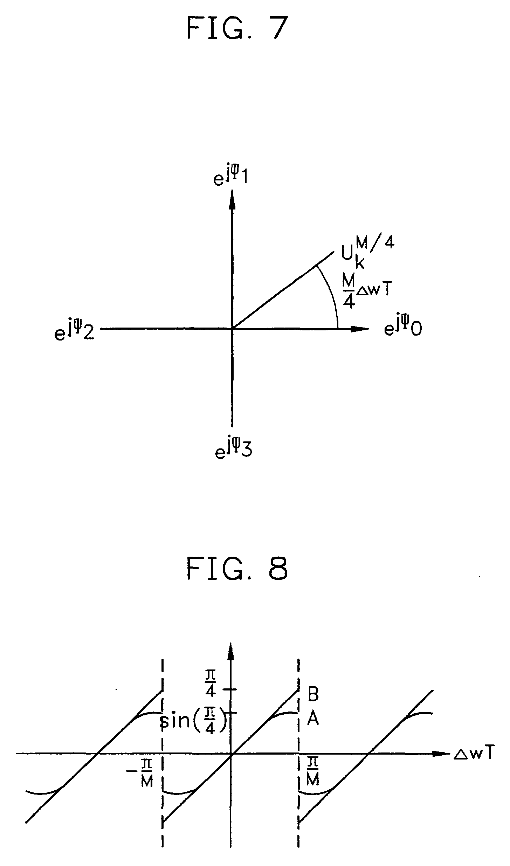

That is, reference phase ψᵢ, which the transmission phase information [M/4]θₖ can take when N=4, is one of Ψ₀ =0 , Ψ₁ =π/2 , Ψ₂ =π and Ψ₃ =-π/2 from the above equation (15). Such a reference phase Ψᵢ is shown in Figure 7. Thus, when frequency offset information ([M/4]ΔωT) exists within a range expressed as the following equation (16), third frequency offset signal generator 60 uses the input altered phase difference value ∠Uₖ^{M/4} and can estimate the altered transmission phase information ([M/4]θₖ)$\text{-} \frac{\text{π}}{\text{4}} \text{<} \frac{\text{M}}{\text{4}} \text{Δω} \text{T} \text{<} \frac{\text{π}}{\text{4}}$

Real component signal C_{k,4} and imaginary component signal S_{k,4} from phase altering portion 50 are applied to first and second sign generators 61 and 62. Also, real component signal C_{k,4} is applied to first multiplier 67, and imaginary component signal S_{k,4} is applied to second multiplier 68. First sign generator 61 generates a first sign signal being a value of a signum function with respect to difference C_{k,4}-S_{k,4} between real component signal C_{k,4} and imaginary component signal S_{k,4} while second sign generator 62 generates a second sign signal being a value of a signum function with respect to sum C_{k,4}+S_{k,4} of real component signal C_{k,4} and imaginary component signal S_{k,4}. Subtracter 63 receives the first and second sign signals and subtracts the second sign signal from the first sign signal, thereby outputting the result. First adder 64 receives the first and second sign signals and adds the second sign signal to the first sign signal, thereby outputting the result. Third sign generator 65 receives the output signal of subtracter 63 to generate a third sign signal being a value of a signum function. Fourth sign generator 66 receives the output signal of subtracter 63 to generate a fourth sign signal being a value of a signum function. First multiplier 67 receives the third sign signal and real component signal C_{k,4} and multiplies the received signals by each other to output the result, while second multiplier 68 receives the fourth sign signal and imaginary component signal S_{k,4} and multiplies the received signals by each other to output the result. Second adder 69 receives the output signals of multipliers 67 and 68 and multiplies the received signals by each other to generate frequency offset signal sin([M/4]ΔωT) . Fourth frequency offset signal generator 70 is obtained by embodying the following equation (17) and receives the first frequency offset signal to generate second frequency offset signal ΔωT.$\text{Δω} \text{T} \text{=} \frac{\text{4}}{\text{M}} {\text{sin}}^{\text{-1}} \text{(} {\text{S}}_{\text{k}} \text{COS} {\text{ψ}}_{\text{i}} \text{-} {\text{C}}_{\text{k}} {\text{sinψ}}_{\text{i}} \text{)}$

Frequency offset signal sin([M/4]ΔωT) or ΔωT is used for sync detection of the receiver.

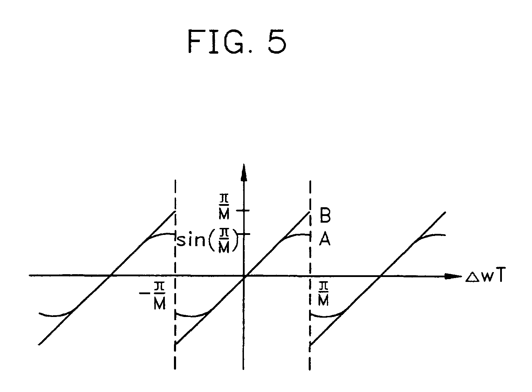

Figures 5 and 8 show discriminating curves for illustrating the frequency offset signals which are generated by frequency offset signal generators 36, 38, 60 and 70 of Figures 3 and 6, respectively. The characteristic curves of Figures 5 and 8 are obtained by discriminators (not shown) under the conditions of |ΔωT|<π/M,|Δfₛ |<fₛ /2M , and fₛ =1/T_{b} . The Figures 5 and 8 curves obtained by the discriminators have a curve "A" for frequency offset signal sin([M/4]ΔωT) and a curve "B" for frequency offset signal ΔωT. The discriminator curve "A" becomes non-linear near a boundary point π/M. However, since the discriminator "A" is useful for detecting the frequency offset information in the actual apparatus frequency offset signal sin([M/4]ΔωT) can be used as the frequency offset information. If frequency offset signal ΔωT is used, it is possible to detect more exact frequency offset information although an amount of the calculation increases.

The present invention detects a frequency offset signal which is generated by mismatching between the carrier frequency and the local oscillated frequency or by the Doppler-shift, in the MPSK communication system. Particularly, the signal which is sampled with a sampling frequency corresponding to the symbol rate is used. As a method for altering the detected phase difference value, the number of the reference phases which are used for determination of the transmission phase information is decreased. Accordingly, the present invention can lower the cost of the hardware of the apparatus implemented. The present invention can be used for automatically controlling frequencies in a modem which uses all the types of the MPSK modulation.
While only certain embodiments of the invention have been specifically described herein, it will be apparent to the skilled addressee that various modifications may be made thereto without departing from the scope of the invention as defined in the appended claims.

## Claims

1. An automatic frequency control method for receiving an M-ary phase-shift keying modulated signal, detecting a frequency offset signal and controlling an osuillated frequency based on the detected frequency offset signal, said automatic frequency control method comprising the steps of:
sampling the received signal with a predetermined sampling frequency and generating a sampled complex signal;
detecting a phase difference value between the currently sampled complex signal and the stored previous sampled complex signal, to generate a first phase difference detection signal of which the phase value is the detected phase difference value;
altering the detected phase difference value of the first phase difference detection signal by a phase altering factor, to generate a second phase difference detection signal of which the phase value is the altered phase difference value;
determining transmission phase information which the altered phase difference value has, by using the altered phase difference value of the second phase difference detection signal and reference phase values which are used for information transmission in the M-ary phase-shift keying modulation; and
generating the frequency offset signal by using the determined transmission phase information and the altered phase difference value.

2. An automatic frequency control method according to claim 1, wherein said sampling frequency matches a symbol rate of the received signal.

3. An automatic frequency control method according to claim 1 or claim 2, wherein said first phase difference detection signal generation step generates the first phase difference detection signal Uₖ having the phase difference value (θₖ+ΔωT) as the phase by calculating the currently sampled complex signal Rₖ and the previously-sampled complex signal Rₖ₋₁ according to the following equation:${\text{U}}_{\text{k}} \text{≡} \frac{{\text{R}}_{\text{k}} {\text{R*}}_{\text{k-1}}}{\left|{\text{R}}_{\text{k}}\right| \text{•} \left|{\text{R}}_{\text{k} \text{-1}}\right|} \text{=e} {\text{}}^{{\text{j(θ}}_{\text{k}} \text{+ΔωT)}}$ in which θₖ is the transmission phase information and ΔωT is the frequency offset signal.

4. An automatic frequency control method according to claim 1 or claim 2, wherein said first phase difference detection signal generation step generates the first phase difference detection signal Uₖ having the phase difference value (θₖ+ΔωT) as the phase by calculating the currently sampled complex signal Rₖ and the previously-sampled complex signal Rₖ₋₁ according to the following equation:${\text{U}}_{\text{k}} {\text{=R}}_{\text{k}} {\text{R*}}_{\text{k-1}}$ in which R*ₖ₋₁ is a complex conjugate of Rₖ₋₁.

5. An automatic frequency control method according to any preceding claim, wherein said second phase difference detection signal generation step generates the second phase difference detection signal having the altered phase difference value obtained by multiplying the phase difference value by the phase altering factor CM/N) being a ratio of the value N of the phase-shift-keying modulated signal and a coefficient N having a relationship of an equation M=lN where l is a positive integer.

6. An automatic frequency control method according to any preceding claim, wherein said transmission phase information determination step comprises the substeps of:
determining the reference phase values which the altered phase difference value can take among the reference phase values which are used for transmission of the information in the M-ary phase-shift-keying modulation; and
comparing the altered phase difference value with the determined reference phase values, to determine the determined reference phase value which is closest to the altered phase difference value among the determined reference phase values as the altered transmission phase information.

7. An automatic frequency control method according to claim 6, wherein said altered phase difference value comprises the frequency off set signal ([M/N]ΔωT) and the altered transmission phase information ([M/N]θₖ) which exist within the range: -π/N < [M/N] ΔωT < π/N in which N satisfies a relationship of equation: M=*l*n where *l* is a positive integer.

8. An automatic frequency control method according to any preceding claim, wherein said frequency offset signal generation step comprises the substeps of:
generating the complex signal having the determined transmission phase information;
multiplying the complex conjugate of the complex signal by the second phase difference detection signal; and
determining the imaginary component signal of the signal obtained by the multiplication as the frequency offset signal.

9. An automatic frequency control method according to claim 8, further comprising the substep of re-determining a value obtained by multiplying an arc-sine value of the imaginary component determined as the frequency offset signal by the phase altering factor, as a frequency offset signal.

10. An automatic frequency control apparatus for receiving an M-ary phase-shift-keying modulated signal, detecting a frequency offset signal and controlling an oscillated frequency based on the detected frequency offset signal, said automatic frequency control apparatus comprising:
means (30) for sampling the received signal with a predetermined sampling frequency and generating a currently sampled complex signal;
phase difference detection means (32) for receiving the currently sampled signal and detecting a phase difference value between the currently sampled complex signal and the stored previous sampled complex signal, to generate a first phase difference detection signal of which the phase value is the detected phase difference value;
phase difference altering means (34) for receiving the first phase difference detection signal and altering the detected phase difference value of the first phase difference detection signal by a phase altering factor, to generate a second phase difference detection signal of which the phase value is the altered phase difference value; and
means (36, 38) for determining transmission phase information which the altered phase difference value has by using the altered phase difference value of the second phase difference detection signal and reference phase values which are used for information transmission in the M-ary phase-shift-keying modulation, and for generating the frequency offset signal by using the determined transmission phase information and the altered phase difference value.

11. An automatic frequency control apparatus according to claim 10, wherein said sampling means (30) samples the received signal with a sampling frequency which matches a symbol rate of the received signal.

12. An automatic frequency control apparatus according to claim 10 or claim 11, wherein said phase difference detection means (34) normalizes the currently sampled complex signal and the previously sampled complex signal, and generates the first phase difference detection signal having the phase difference value detected by the normalization.

13. An automatic frequency control apparatus according to claim 10 or claim 11, wherein said phase difference detection means (34) complex conjugate-operates the currently sampled complex signal and the previously sampled complex signal, and generates the first phase difference detection signal having the phase difference value detected by the complex-conjugate-operation.

14. An automatic frequency control apparatus according to any one of claims 10 to 13, wherein said phase difference altering means (34) generates the second phase difference detection signal having the altered phase difference value obtained by multiplying the detected phase difference value which the first phase difference detection signal has, by the phase altering factor (M/N) in which the value M of the phase-shift-keying modulated signal is a numerator and a coefficient N having a relationship of an equation M=IN where I is a positive integer is a denominator.

15. An automatic frequency control apparatus according to any one of claims 10 to 14, wherein said frequency offset signal generation means (36, 36) comprises a first frequency offset signal generator (36) for determining the reference phase value in which a difference between the reference phase values and the altered phase difference value used for the information transmission in the M-ary phase-shift-keying modulation exists in the range:
-π/N < [M/N]ΔωT < π/N in which the value N of the M-ary phase-shift-keying modulated signal is a numerator and a coefficient N satisfying an equation: M=lN where l is a positive integer is a denominator, and generating the complex signal having the determined altered transmission phase information, and for multiplying the complex conjugate of the complex signal by the second phase difference detection signal, thereby generating the imaginary component signal of the signal obtained by the multiplication as the frequency offset signal.

16. An automatic frequency control apparatus according to claim 15, further comprising a second frequency offset signal generator (38) for generating a new frequency offset signal by multiplying the arc sine value of the frequency offset signal generated by said first frequency offset signal generator (36) by the phase altering factor.

17. An automatic frequency control apparatus as claimed in any one of claims 10 to 16 wherein phase difference altering means (34) for receiving the first phase difference detection signal and altering the detected phase difference value of the first phase difference detection signal by a phase altering factor M/2 with respect to the value M of the M-ary phase-shift-keying modulated signal to generate a second phase difference detection signal ( Uₖ ^{M/2} =Cₖ +jSₖ ) of which the phase value is the altered phase difference value ([M/2](θₖ+ΔωT));
and
means (36, 38) for receiving the second phase difference detection signal and determining transmission phase information Ψ which the altered phase difference value has, by using the altered phase difference value of the second phase difference detection signal and reference phase values which are used for information transmission in the M-ary phase shift keying modulation, and for multiplying the second phase difference detection signal by complex signal e^{-j}Ψ having the transmission phase information to generate the frequency offset signal based on a sign of the Cₖ among the imaginary component (Sₖ cosΨ-CₖsinΨ) of the signal obtained by the multiplication.

18. An automatic frequency control apparatus according to claim 17, wherein said frequency offset signal generation means (36, 38) determines imaginary component signal Sₖ as the frequency offset signal when real component signal Cₖ is greater than zero, while determining imaginary component signal -Sₖ as the frequency offset signal when real component signal Cₖ is less than zero.

19. An automatic frequency control apparatus according to claim 18, further comprising means (36, 38) for generating a new frequency offset signal by eradicating the phase altering factor M/2 and a sine function component which are included in the imaginary component signal Sₖ.

20. An automatic frequency control apparatus as claimed in any one of claims 10 to 16, wherein phase difference altering means (50) for receiving the first phase difference detection signal and altering the detected phase difference value of the first phase difference detection signal by using a phase altering factor M/4 with respect to the N of the M-ary phase-shift-keying modulated signal, to generate a second phase difference detection signal ( Uk ^{M/4} =Cₖ +jSₖ) of which the phase value is the altered phase difference value ([M/4](θₖ+ΔωT)); and
means (60, 70) for receiving the second phase difference detection signal and generating the frequency offset signal by using the real and imaginary components of the second phase difference detection signal.

21. An automatic frequency control apparatus according to claim 20, wherein said frequency offset signal generation means (60, 70) comprises:
a first sign generator (61) for generating a first sign signal being a value of a signum function obtained by subtracting an imaginary component of the second phase difference detection signal from a real component thereof;
a second sign generator (62) for generating a second sign signal being a value of a signum function obtained by adding the real and imaginary components;
a subtracter (63) for subtracting the second sign signal from the first sign signal;
a first adder (64) for adding the first and second sign signals;
a third sign generator (65) for outputting a value of a signum function of the signal applied from the subtracter (63)
a fourth sign generator (66) for outputting a value of a signum function of the signal applied from the first adder (64)
a first multiplier (67) for multiplying a first component signal by the output signal from said third sign generator (65)
a second multiplier (68) for multiplying a second component signal by the output signal from said fourth sign generator (66); and
a second adder (69) for adding the output signals of said first (67) and second (68) multipliers and generating a frequency offset signal.

22. An automatic frequency control apparatus according to claim 21 further comprising means (70) for generating a new frequency offset signal by multiplying an arc-sine value of the frequency offset signal generated by said frequency offset signal generation means (GO, 70) by the phase altering factor.

## Patentansprüche

1. Verfahren für eine automatische Frequenzregelung zum Empfangen eines durch eine m-wertige Phasenumtastung modulierten Signals (M-aray phase-shift keying modulated signal), das ein Frequenzoffset-Signal erfasst und eine Schwingungsfrequenz auf der Basis des erfassten Frequenzoffset-Signals regelt, wobei das Verfahren für eine automatische Frequenzregelung die folgenden Schritte umfasst:
Abtasten des empfangenen Signals mit einer vorgegebenen Abtastfrequenz und Erzeugen eines abgetasteten komplexen Signals;
Erfassen eines Phasendifferenzwerts zwischen dem aktuell abgetasteten komplexen Signal und dem gespeicherten vorherigen abgetasteten komplexen Signal zum Erzeugen eines ersten Phasendifferenz-Erfassungssignals, dessen Phasenwert der erfasste Phasendifferenzwert ist;
Ändern des erfassten Phasendifferenzwerts des ersten Phasendifferenz-Erfassungssignals um einen Phasenänderungsfaktor zum Erzeugen eines zweiten Phasendifferenz-Erfassungssignals, dessen Phasenwert der geänderte Phasendifferenzwert ist;
Ermitteln von Übertragungsphasen-Informationen, die der geänderte Phasendifferenzwert aufweist, durch Verwenden des geänderten Phasendifferenzwerts des zweiten Phasendifferenz-Erfassungssignals und von Referenzphasenwerten, die zur informationsübertragung in der m-wertigen Phasenumtastungs-Modulation verwendet werden; und
Erzeugen des Frequenzoffset-Signals durch Verwenden der ermittelten Übertragungsphasen-Informationen und des geänderten Phasendifferenzwerts.

2. Verfahren für eine automatische Frequenzregelung nach Anspruch 1, wobei die Abtastfrequenz mit einer Zeichengeschwindigkeit des empfangenen Signals übereinsfimmt.

3. Verfahren für eine automatische Frequenzregelung nach Anspruch 1 oder Anspruch 2, wobei der Erzeugungsschritt für das erste Phasendifferenz-Erfassungssignal das erste Phasendifferenz-Erfassungssignal Uₖ erzeugt, das den Phasendifferenzwert (θₖ+ΔωT) als die Phase aufweist, indem das aktuell abgetastete komplexe Signal Rₖ und das vorher abgetastete komplexe Signal Rₖ₋₁ gemäß der folgenden Gleichung berechnet werden:${\text{U}}_{\text{k}} \text{≡} \frac{{\text{R}}_{\text{k}} \text{R} {\text{*}}_{\text{k} \text{-1}}}{\left|{\text{R}}_{\text{k}}\right| \text{•} \left|{\text{R}}_{\text{k} \text{-1}}\right|} \text{=} \text{e} {\text{}}^{\text{j} {\text{(θ}}_{\text{k}} \text{+Δω} \text{T} \text{)}}$ wobei θₖ die Übertragungsphasen-Informationen sind, und ΔωT das Frequenzoffset-Signal ist

4. Verfahren für eine automatische Frequenzregelung nach Anspruch 1 oder Anspruch 2, wobei der Erzeugungsschritt für das erste Phasendifferenz-Erfassungssignal das erste Phasendifferenz-Erfassungssignal Uₖ erzeugt, das den Phasendifferenzwert (θₖ+ΔωT) als die Phase aufweist, indem das aktuell abgetastete komplexe Signal Rₖ und das vorher abgetastete komplexe Signal Rₖ₋₁ gemäß der folgenden Gleichung berechnet werden:${\text{U}}_{\text{k}} \text{=} {\text{R}}_{\text{k}} \text{R} {\text{*}}_{\text{k} \text{-1}}$ wobei R*ₖ₋₁ eine konjugiert komplexe Zahl von Rₖ₋₁ ist.

5. Verfahren für eine automatische Frequenzregelung nach einem der vorhergehenden Ansprüche, wobei der Erzeugungsschritt für das zweite Phasendifferenz-Erfassungssignal das zweite Phasendifferenz-Erfassungssignal erzeugt, das den geänderten Phasendifferenzwert aufweist, der durch Multiplizieren des Phasendifferenzwerts mit dem Phasenänderungsfaktor (M/N) erhalten wird, der ein Verhältnis des Werts N des durch Phasenumtastung modulierten Signals und des Koeffizienten N ist, der ein Verhältnis einer Gleichung M=1 N aufweist, wobei 1 eine positive Ganzzahl ist.

6. Verfahren für eine automatische Frequenzregelung nach einem der vorhergehenden Ansprüche, wobei der Schritt zur Ermittlung der Übertragungsphasen-Informationen die folgenden untergeordneten Schritte umfasst:
Ermitteln der Referenzphasenwerte, die der geänderte Phasendifferenzwert bei den Referenzphasenwerten annehmen kann, die zur Übertragung der lnformationen in der m-wertigen Phasenumtastungs-Modulation verwendet werden; und
Vergleichen des geänderten Phasendifferenzwerts mit den ermittelten Referenzphasenwerten zum Bestimmen des ermittelten Referenzphasenwerts, der von den ermittelten Referenzphasenwerten dem geänderten Phasendifferenzwert als die geänderten Übertragungsphasen-Informationen am nächsten liegt.

7. Verfahren für eine automatische Frequenzregelung nach Anspruch 6, wobei der geänderte Phasendifferenzwert das Frequenzoffset-Signal ([M/N] ΔωT) und die geänderten Übertragungsphasen-Informationen ([M/N] θₖ) umfasst, die in dem Bereich: - π/N < [M/N]ΔωT < π/N vorhanden sind, wobei N ein Verhältnis der Gleichung: M = *1*n erfüllt, wobei *1* eine positive Ganzzahl ist.

8. Verfahren für eine automatische Frequenzregelung nach einem der vorhergehenden Ansprüche, wobei der Schritt zum Erzeugen des Frequenzoffset-Signals die folgenden untergeordneten Schritte umfasst:
Erzeugen des komplexen Signals, das die ermittelten Übertragungsphasen-Informationen aufweist;
Multiplizieren der konjugiert komplexen Zahl des komplexen Signals mit dem zweiten Phasendifferenz-Erfassungssignal; und
Ermitteln des imaginären Komponentensignals des Signals, das durch die Multiplikation als das Frequenzoffset-Signal erhalten wird.

9. Verfahren für eine automatische Frequenzregelung nach Anspruch 8, des Weiteren umfassend den untergeordneten Schritt des erneuten Ermittelns eines Werts, der durch Multiplizieren eines Arkussinus-Werts der imaginären Komponente, die als das Frequenzoffset-Signal ermittelt wird, mit den Phasenänderungsfaktor als ein Frequenzoffset-Signal erhalten wird.

10. Vorrichtung für eine automatische Frequenzregelung zum Empfangen eines durch eine m-wertige Phasenumtastung modulierten Signals, die ein Frequenzoffset-Signal erfasst und eine Schwingungsfrequenz auf der Basis des erfassten Frequenzoffset-Signals regelt, wobei die Vorrichtung für eine automatische Frequenzregelung Folgendes umfasst:
Mittel (30) zum Abtasten des empfangenen Signals mit einer vorgegebenen Abtastfrequenz und Erzeugen eines aktuell abgetasteten komplexen Signals;
Mittel (32) zum Erfassen eines Phasendifferenzwerts zum Empfangen des aktuell abgetasteten Signals und Erfassen eines Phasendifferenzwerts zwischen dem aktuell abgetasteten komplexen Signal und dem gespeicherten vorherigen abgetasteten komplexen Signal, um ein erstes Phasendifferenz-Erfassungssignal zu erzeugen, dessen Phasenwert der erfasste Phasendifferenzwert ist;
Mittel (34) zum Ändern der Phasendifferenz zum Empfangen des ersten Phasendifferenz-Erfassungssignals und Ändern des erfassten Phasendifferenzwerts des ersten Phasendifferenz-Erfassungssignals um einen Phasenänderungsfaktor, um ein zweites Phasendifferenz-Erfassungssignal zu erzeugen, dessen Phasenwert der geänderte Phasendifferenzwert ist; und
Mittel (36, 38) zum Ermitteln von Übertragungsphasen-Informationen, die der geänderte Phasendifferenzwert aufweist, indem der de geänderte Phasendifferenzwert des zweiten Phasendifferenz-Erfassungssignals und die Referenzphasenwerte verwendet werden, die zur Informationsübertragung in der m-wertigen Phasenumtastungs-Modulation verwendet werden, und zum Erzeugen des Frequenzoffset-Signals, indem die ermittelten Übertragungsphasen-Informationen und der geänderte Phasendifferenzwert verwendet werden.

11. Vorrichtung für eine automatische Frequenzregelung nach Anspruch 10, wobei das Mittel (30) zum Abtasten das empfangene Signal mit einer Abtastfrequenz abtastet, die mit einer Zeichengeschwindigkeit des empfangenen Signals übereinstimmt.

12. Vorrichtung für eine automatische Frequenzregelung nach Anspruch 10 oder Anspruch 11, wobei das Mittel (34) zum Erfassen der Phasendifferenz das aktuell abgetastete komplexe Signal und das vorher abgetastete komplexe Signal normiert (normalize) und das erste Phasendifferenz-Erfassungssignal erzeugt, das den von der Normierung (normalization) erfassten Phasendifferenzwert aufweist.

13. Vorrichtung für eine automatische Frequenzregelung nach Anspruch 10 oder Anspruch 11, wobei das Mittel (34) zum Erfassen der Phasendifferenz das aktuell abgetastete komplexe Signal und das vorher abgetastete komplexe Signal konjugiert komplex anwendet (complex conjugate-operate) und das erste Phasendifferenz-Erfassungssignal erzeugt, das den von der konjugiert komplexen Anendung (complex-conjugate-operation) erfassten Phasendifferenzwert aufweist.

14. Vorrichtung für eine automatische Frequenzregelung nach einem der Ansprüche 10 bis 13, wobei das Mittel (34) zum Ändem der Phasendifferenz das zweite Phasendifferenz-Erfassungssignal erzeugt, das den geänderten Phasendifferenzwert aufweist, der durch Multiplizieren des erfassten Phasendifferenzwerts, den das erste Phasendifferenz-Erfassungssignal aufweist, mit dem Phasenänderungsfaktor (M/N) erhalten wird, in dem der Wert M des durch Phasenumtastung modulierten Signals ein Zähler ist, und ein Koeffizient N, der ein Verhältnis einer Gleichung M=IN aufweist, wobei I eine positive Ganzzahl ist, ein Nenner ist.

15. Vorrichtung für eine automatische Frequenzregelung nach einem der Ansprüche 10 bis 14, wobei das Mittel (36, 36) zum Erzeugen des Frequenzoffset-Signals einen ersten Frequenzoffset-Signalgenerator (36) zum Ermitteln des Referenzphasenwerts umfasst, in dem eine Differenz zwischen den Referenzphasenwerten und dem geänderten Phasendifferenzwert, der für die Informationsübertragung in der m-wertigen Phasenumtastungs-Modulation verwendet wird, in dem folgenden Bereich vorhanden ist:
- π/N < [M/N]ΔωT < π/N, in dem der Wert N des durch m-wertige Phasenumtastung modulierten Signals ein Zähler ist, und ein Koeffizient N, der eine Gleichung:M=1N erfüllt, wobei 1 eine positive Ganzzahl ist, ein Nenner ist und das komplexe Signal erzeugt, das die ermittelten geänderten Übertragungsphasen-Informationen enthält und zum Multiplizieren der konjugiert komplexen Zahl des komplexen Signals mit dem zweiten Phasendifferenz-Erfassungssignal verwendet wird, wodurch das imaginäre Komponentensignal des Signals erzeugt wird, das durch die Multiplikation als das Frequenzoffset-Signal erhalten wird.

16. Vorrichtung für eine automatische Frequenzregelung nach Anspruch 15, die des Weiteren einen zweiten Frequenzoffset-Signalgenerator (38) umfasst zum Erzeugen eines neuen Frequenzoffset-Signals durch Multiplizieren des Arkussinus-Werts des Frequenzoffset-Signals, das von dem ersten Frequenzoffset-Signalgenerator (36) durch den Phasenänderungsfaktor erzeugt wird.

17. Vorrichtung für eine automatische Frequenzregelung nach einem der Ansprüche 10 bis 16, wobei Mittel (34) zum Ändern der Phasendifferenz vorhanden sind zum Empfangen des ersten Phasendifferenz-Erfassungssignals und Ändern des erfassten Phasendifferenzwerts des ersten Phasendifferenz-Erfassungssignals durch einen Änderungsfaktor M/2 in Bezug auf den Wert M des durch die m-wertige Phasenumtastung modulierten Signals, um ein zweites Phasendifferenz-Erfassungssignal (Uₖ^{M/2} =Cₖ + jSₖ), dessen Phasenwert der geänderte Phasendifferenzwert ([M/2] ((θₖ+ΔωT)) ist, zu erzeugen,
und
Mittel (36, 38) zum Empfangen des zweiten Phasendifferenz-Erfassungssignals und Ermitteln von Übertragungsphasen-Informationen ψ vorhanden sind, die der geänderte Phasendifferenzwert aufweist, indem der geänderte Phasendifferenzwert des zweiten Phasendifferenz-Erfassungssignals und Referenzphasenwerte verwendet werden, die zur Informationsübertragung in der m-wertigen Phasenumtastungs-Modulation verwendet werden und zum Multiplizieren des zweiten Phasendifferenz-Erfassungssignals mit dem komplexen Signal e^{-jψ}, das die Übertragungsphasen-Informationen aufweist, um das Frequenzoffset-Signal zu erzeugen auf der Basis eine Vorzeichens (sign) des Cₖ von der imaginären Komponente (Sₖcosψ - Cₖsinψ) des Signals, das durch die Multiplikation erhalten wird.

18. Vorrichtung für eine automatische Frequenzregelung nach Anspruch 17, wobei das Mittel (36, 38) zum Erzeugen des Frequenzoffset-Signals ein imaginäres Komponentensignal Sₖ als das Frequenzoffset-Signal ermittelt, wenn ein reales Komponentensignal Cₖ größer als Null ist, während ein imaginäres Komponentensignal Sₖ als das Frequenzoffset-Signal ermittelt wird, wenn ein reales Komponentensignal Cₖ Kleiner als Null ist.

19. Vorrichtung für eine automatische Frequenzregelung nach Anspruch 18, die des Weiteren Mittel (36, 38) zum Erzeugen eines neuen Frequenzoffset-Signals durch Löschen (eradicate) des Phasenänderungsfaktors M/2 und einer Sinusfunktions-Komponente, die in dem imaginären Komponentensignal Sₖ enthalten sind.

20. Vorrichtung für eine automatische Frequenzregelung nach einem der Ansprüche 10 bis 16, wobei Mittel (50) zum Ändern der Phasendifferenz vorhanden sind zum Empfangen des ersten Phasendifferenz-Erfassungssignals und Ändern des erfassten Phasendifferenzwerts des ersten Phasendifferenz-Erfassungssignals, indem ein Phasenänderungsfaktor M/4 in Bezug auf den Wert N des durch die m-wertige Phasenumtastung modulierten Signals verwendet wird, um ein zweites Phasendifferenz-Erfassungssignal (Uₖ^{M/4} =Cₖ + jSₖ), dessen Phasenwert der geänderte Phasendifferenzwert ([M/4] ((θₖ+ΔωT)) ist, zu erzeugen; und
Mittel (60, 70) zum Empfangen des zweiten Phasendifferenz-Erfassungssignals und Erzeugen des Frequenzoffset-Signals vorhanden sind, indem die realen und imaginären Komponenten des zweiten Phasendifferenz-Erfassungssignals verwendet werden.

21. Vorrichtung für eine automatische Frequenzregelung nach Anspruch 20, wobei das Mittel (60,70) zum Erzeugen des Frequenzoffset-Signals Folgendes umfasst:
einen ersten Vorzeichengenerator (61) (sign generator) zum Erzeugen eines ersten Vorzeichensignals, das ein Wert einer Vorzeichenfunktion ist, die durch Subtrahieren einer imaginären Komponente des zweiten Phasendifferenz-Erfassungssignals von einer realen Komponente davon erhalten wird;
einen zweiten Vorzeichengenerator (62) zum Erzeugen eines zweiten Vorzeichensignals, das ein Wert einer Vorzeichenfunktion ist, die durch Addieren der realen und imaginären Komponenten erhalten wird;
einen Subtrahierer (63) zum Subtrahieren des zweiten Vorzeichensignals von dem ersten Vorzeichensignal;
einen ersten Addierer (64) zum Addieren der ersten und zweiten Vorzeichensignale;
einen dritten Vorzeichengenerator (65) zum Ausgeben eines Werts einer Vorzeichenfunktion des vom Subtrahierer (63) angelegten Signals;
einen vierten Vorzeichengenerator (66) zum Ausgeben eines Werts einer Vorzeichenfunktion des von dem ersten Addierer (64) angelegten Signals;
einen ersten Multiplik6tor (67) zum Multiplizieren eines ersten Komponentensignals mit dem Ausgangssignal von dem dritten Vorzeichengenerator (65);
einen zweiten Multiplikator (68) zum Multiplizieren eines zweiten Komponentensignals mit dem Ausgangssignal von dem vierten Vorzeichengenerator (66); und
einen zweiten Addierer (69) zum Addieren der Ausgangssignale der ersten (67) und zweiten (68) Multiplikatoren und Erzeugen eines Frequenzoffset-Signals.

22. Vorrichtung für eine automatische Frequenzregelung nach Anspruch 21, die des Weiteren Mittel (70) zum Erzeugen eines neuen Frequenzoffset-Signals durch Multiplizieren eines Arkussinus-Werts des Frequenzoffset-Signals umfasst, das von den Mitteln zum Erzeugen eines Frequenzoffset-Signals (60, 70) durch den Phasenänderungsfaktor erzeugt wird.

## Revendications

1. Procédé de commande automatique de fréquence pour recevoir un signal modulé selon une modulation par déphasage d'ordre M, détecter un signal de décalage de fréquence et commander une fréquence d'oscillation sur la base du signal de décalage de fréquence détecté, ledit procédé de commande automatique de fréquence comprenant les étapes consistant à :
échantillonner le signal reçu avec une fréquence d'échantillonnage prédéterminée et produire un signal complexe échantillonné;
détecter une valeur de différence de phase entre le signal complexe actuellement échantillonné et le signal complexe précédent échantillonné mémorisé, pour produire un premier signal de détection de différence de phase dont la valeur de phase est la valeur de différence de phase détectée;
modifier la valeur de différence de phase détectée du premier signal de détection de différence de phase par un facteur de modification de phase, pour produire un second signal de détection de différence de phase, dont la valeur de phase est la valeur de différence de phase modifiée;
déterminer une information de phase de transmission, que la valeur de différence de phase modifiée possède, moyennant l'utilisation de la valeur de différence de phase modifiée du second signal de détection de différence de phase et des valeurs de phase de référence, qui sont utilisées pour la transmission d'une information dans la modulation à déplacement de phase d'ordre M; et
produire le signal de décalage de fréquence en utilisant l'information de différence de phase de transmission déterminée et la valeur de différence de phase modifiée.

2. Procédé de commande de fréquence automatique selon la revendication 1, selon lequel ladite fréquence d'échantillonnage concorde avec une cadence de symboles de signal reçu.

3. Procédé de commande automatique de fréquence selon la revendication 1 ou la revendication 2, selon lequel ladite étape de production du premier signal de détection de différence de phase produit le premier signal de détection de différence de phase Uₖ possédant la valeur de différence de phase (θₖ+ΔωT) en tant que phase par calcul du signal complexe actuellement échantillonné Rₖ et du signal complexe échantillonné antérieurement Rₖ₋₁ conformément à l'équation suivante :${\text{U}}_{\text{k}} \text{≡} \frac{{\text{R}}_{\text{k}} {\text{R*}}_{\text{k-1}}}{\left|{\text{R}}_{\text{k}}\right| \text{•} \left|{\text{R}}_{\text{k-1}}\right|} {\text{=e}}^{\text{j(θ}} {\text{k}}^{\text{+ΔωT)}}$ dans laquelle θₖ est l'information de phase de transmission et ΔωT est le signal de décalage de fréquence.

4. Procédé de commande automatique de fréquence selon la revendication 1 ou la revendication 2, selon lequel ladite étape de production du signal de détection de différence de phase produit le premier signal de détection de différence de phase Uₖ possédant la valeur de différence de phase (θₖ+,ΔωT) en tant que phase par calcul du signal complexe actuellement échantillonné Rₖ et du signal complexe échantillonné antérieurement Rₖ₋₁ conformément à l'équation suivante :${\text{U}}_{\text{k}} {\text{= R}}_{\text{k}} {\text{R*}}_{\text{k-1}}$ dans laquelle R*ₖ₋₁ est une conjuguée complexe de Rₖ₋₁.

5. Procédé de commande automatique de fréquence selon l'une quelconque des revendications précédentes, selon lequel ladite étape de production du second signal de détection de différence de phase produit le second signal de détection de différence de phase possédant la valeur de différence de phase modifiée par multiplexage de la valeur de différence de phase par le facteur de manipulation de phase (M/N) possédant un rapport qui est un rapport de la valeur M du signal modulé selon une modulation à déplacement de phase, et un coefficient N possédant une relation correspondant à la relation M=lN, l étant un entier positif.

6. Procédé de commande automatique de fréquence selon l'une quelconque des revendications précédentes, selon lequel ladite étape de détermination de l'information de la phase de transmission comprend les sous-étapes consistant à :
déterminer les valeurs de phase de référence que la valeur de différence de phase modifiée peut prendre parmi les valeurs de phase de référence qui sont utilisées pour la transmission de l'information dans la modulation par déplacement de phase d'ordre M; et
comparer la valeur de différence de phase modifiée aux valeurs de phase de référence déterminées pour déterminer la valeur de phase de référence déterminée, qui est la plus proche des valeurs de différence de phase modifiée parmi les valeurs de phase de référence déterminées en tant qu'information de phase de transmission modifiée.

7. Procédé de commande automatique de fréquence selon la revendication 6, selon lequel ladite valeur de différence de phase modifiée comprend le signal de réglage à décalage de fréquence ([M/N]Δω T) et l'information de phase de transmission modifier ([M/N]θₖ), qui est présente dans la gamme : -π/N < [M/N]ΔωT < π/N, dans laquelle N satisfait à une relation correspondant à l'équation : M=In, 1 étant un entier positif.

8. Procédé de commande automatique de fréquence selon l'une quelconque des revendications précédentes, selon lequel ladite étape de production du signal de décalage de fréquence comprend les sous-étapes consistant à :
produire le signal complexe possédant l'information de phase de transmission déterminée,
multiplier la conjuguée complexe du signal complexe par le second signal de détection de différence de phase; et
déterminer le signal de composante imaginaire du signal obtenu au moyen de la multiplication, en tant que signal de décalage de fréquence.

9. Procédé de commande automatique de fréquence selon la revendication 8, comprenant la sous-étape de redétermination d'une valeur obtenue par multiplication de la valeur arc-sinus de la composante imaginaire déterminée en tant que signal de décalage de fréquence par le facteur de modification de phase, en tant que signal de décalage de fréquence.

10. Dispositif de commande automatique de fréquence pour recevoir un signal modulé selon une modulation par déplacement de phase d'ordre M, détecter un signal de décalage de fréquence et commander une fréquence d'oscillation sur la base du signal de décalage de fréquence détecté, ledit dispositif de commande automatique de fréquence comprenant :
des moyens (30) pour échantillonner le signal reçu avec une fréquence d'échantillonnage prédéterminée et produire un signal complexe échantillonné;
des moyens (32) de détection de différence de phase pour recevoir le signal actuellement échantillonné et détecter une valeur de différence de phase entre le signal complexe actuellement échantillonné et le signal complexe précédent échantillonné mémorisé, pour produire un premier signal de détection de différence de phase dont la valeur de phase est la valeur de différence de phase détectée;
des moyens (34) de modification de la différence de phase pour recevoir le premier signal de détection de différence de phase et modifier la valeur de différence de phase détectée du premier signal de détection de différence de phase par un facteur de modification de phase, pour produire un second signal de détection de différence de phase, dont la valeur de phase est la valeur de différence de phase modifiée; et
des moyens (36,38) de détermination de l'information de transmission, que la valeur de différence de phase modifiée possède, moyennant l'utilisation de la valeur de différence de phase modifiée du second signal de détection de différence de phase et des valeurs de phase de référence, qui sont utilisées pour la transmission d'une information dans la modulation à déplacement de phase d'ordre M, et produire le signal de décalage de fréquence en utilisant l'information de différence de phase de transmission déterminée et la valeur de différence de phase modifiée.

11. Dispositif de commande automatique de fréquence selon la revendication 10, dans lequel lesdits moyens d'échantillonnage (30) échantillonne le signal reçu avec une fréquence d'échantillonnage qui concorde avec une cadence de symboles du signal reçu.

12. Dispositif de commande automatique de fréquence selon la revendication 10 ou la revendication 11, dans lequel lesdits moyens (34) de détection de la différence de phase normalisent le signal complexe actuellement échantillonné et le signal complexe échantillonné antérieurement et produisent le premier signal de détection de différence de phase, possédant la valeur de différence de phase détectée par la normalisation.

13. Dispositif de commande automatique de fréquence selon la revendication 10 ou la revendication 11, dans lequel lesdits moyens (34) de détection de la différence de phase traitent par conjuguée complexe le signal complexe échantillonné actuellement et le signal complexe échantillonné antérieurement, et produisent le premier signal de détection de différence de phase possédant la valeur de différence de phase détectée par l'opération avec la conjuguée complexe.

14. Dispositif de commande automatique de fréquence selon l'une quelconque des revendications 10 à 13, dans lequel lesdits moyens (34) de modification de la différence de phase produisent le second signal de détection de différence de phase comportant la valeur de différence de phase modifiée obtenue en multipliant la valeur de différence de phase détectée, que possède le premier signal de détection de différence de phase, par le facteur de modification de phase (M/N) dans lequel la valeur M du signal modulé selon une modulation par déplacement de phase est un numérateur, et un coefficient M possédant une relation correspondant à l'équation M = IN, I étant un entier positif, est un dénominateur.

15. Dispositif de commande automatique de fréquence selon l'une quelconque des revendications 10 à 14, dans lequel les moyens (35,36) de production du signal de décalage de fréquence comprennent un premier générateur (36) de signal de décalage de fréquence pour déterminer la valeur de phase de référence, dans lequel une différence entre la valeur de phase de référence et la valeur de différence de phase modifiée utilisée pour la transmission d'informations dans la modulation du type à déplacement de phase d'ordre M, existe dans la gamme :
-π/N < [M/N]ΔωT < π/N, dans laquelle la valeur N du signal modulé selon une modulation à déplacement de phase d'ordre M est un numérateur et un coefficient N satisfaisant à l'équation : M = lN, l étant un entier positif, est un dénominateur, et pour produire le signal complexe possédant l'information de phase de transmission modifiée déterminée et pour multiplier la conjuguée complexe du signal complexe par le second signal de détection de différence de phase, ce qui produit le signal de composante imaginaire du signal obtenu par multiplication en tant que signal de décalage de fréquence.

16. Dispositif de commande automatique de fréquence selon la revendication 15, comprenant en outre un générateur (38) du second signal de décalage de fréquence pour produire un nouveau signal de décalage de fréquence par multiplication de la valeur arc-sinus du signal de décalage de fréquence produit par ledit premier générateur (36) du signal de décalage de fréquence par le facteur de modification de phase.

17. Dispositif de commande automatique de fréquence selon l'une quelconque des revendications 10 à 16, dans lequel les moyens (34) de modification de la différence de phase pour recevoir le premier signal de détection de différence de phase et modifier la valeur de différence de phase détectée du premier signal de détection de différence de phase par un facteur de modification de phase M/2 par rapport à la valeur M du signal modulé selon une modulation par déplacement de phase d'ordre M pour produire un second signal de détection de différence de phase (Uₖ^{M/2} = Cₖ+jSₖ), dont la valeur de phase est la valeur de différence de phase modifiée ([M/2] (θₖ+ΔωT)), et
des moyens (36,38) pour recevoir le second signal de détection de différence de phase et déterminer l'information de phase de transmission ψ, que possède la valeur de différence de phase modifiée, moyennant l'utilisation de la valeur de différence de phase modifiée du second signal de détection de différence de phase, et des valeurs de phase de référence qui sont utilisées pour la transmission d'informations dans la modulation de déplacement de phase d'ordre M, et pour multiplier le second signal de détection de différence de phase par le signal complexe e^{-jψ} possédant l'information de phase de transmission pour générer le signal de décalage de fréquence sur la base d'un signe de la valeur Cₖ parmi la composante imaginaire (SₖcosΨ-CₖsinΨ) du signal fourni par la multiplication.

18. Dispositif de commande automatique de fréquence selon la revendication 17, dans lequel les moyens (36,38) de production du signal de décalage de fréquence déterminent le signal de composante imaginaire Sₖ en tant que signal de décalage de fréquence lorsque le signal de composante Cₖ est supérieur à zéro, tout en déterminant un signal de composante imaginaire -Sₖ en tant que signal de décalage de fréquence lorsque le signal de composante réel Cₖ est inférieur à zéro.

19. Dispositif de commande automatique de fréquence selon la revendication 18, comprenant en outre des moyens (36,38) pour produire un nouveau signal de décalage de fréquence par éradication du facteur de modification de phase M/2 et d'une composante de fonction sinus, qui sont inclus dans le signal de composante imaginaire (Sₖ) .

20. Dispositif de commande automatique de fréquence selon l'une quelconque des revendications 10 à 16, dans lequel les moyens (50) de modification de la différence de phase pour la réception du premier signal de détection de différence de phase et la modification de la valeur de différence de phase détectée du premier signal de détection de différence de phase moyennant l'utilisation d'un facteur de modification de phase M/4 en rapport avec la valeur N du signal modulé selon une modulation par déplacement de phase d'ordre M, pour générer un second signal de détection de différence de phase (Uk^{M/4}= Cₖ+jSₖ) , dont la valeur de phase est la valeur de phase modifiée ( [M/4] (θₖ+ΔωT) ) ; et
des moyens (60,70) pour recevoir le second signal de détection de différence de phase et produire le signal de décalage de fréquence en utilisant les composantes réelles et imaginaire du second signal de détection de différence de phase.

21. Dispositif de commande automatique de fréquence selon la revendication 20, dans lequel lesdits moyens (60,70) de production du signal de décalage de fréquence comprennent :
un premier générateur de signe (61) pour produire un premier signal de signe ayant une valeur d'une fonction de signe obtenue en soustrayant une composante imaginaire du second signal de détection de différence de phase, d'une composante réelle de ce signal;
un second générateur de signe (62) pour produire un second signal de signe qui est une valeur d'une fonction de signe fournie par addition des composantes réelle et imaginaire;
un soustracteur (63) pour soustraire le second signal de signe, du premier signal de signe;
un premier additionneur (64) pour additionner les premier et second signaux de signe;
un troisième générateur de signe (65) pour délivrer une valeur d'une fonction de signe du signal appliqué par le soustracteur (63);
un quatrième générateur de signe (66) pour mémoriser une valeur d'une fonction de signe du signal appliqué à partir du premier additionneur (64);
un premier multiplieur (67) pour multiplier un premier signal de composante par le signal de sortie délivré par ledit troisième générateur de signe (65);
un second multiplieur (68) pour multiplier un second signal de composante par le signal de sortie délivré par ledit quatrième générateur de signe (66); et
un second additionneur (69) pour additionner les signaux de sortie dudit premier multiplieur (67) et dudit second multiplieur (68) et produire un signal de décalage de fréquence.

22. Dispositif de commande automatique de fréquence selon la revendication 21, comprenant en outre des moyens (70) pour produire un nouveau signal de décalage de fréquence par multiplication d'une valeur arc-sinus du signal de décalage de fréquence généré par lesdits moyens (GO, 70) de production du signal de décalage de fréquence par le facteur de modification de phase.
